# EUROPÄISCHE PATENTANMELDUNG

(11) **EP 1 111 943 A2**
(43) Veröffentlichungstag der Anmeldung: **27.06.2001**
(21) Anmeldenummer: 00204535.9
(22) Anmeldetag: 15.12.2000
(51) Int. Cl.: H04Q 7/14

(54) **Mobilfunkgerät mit adaptiver Erkennung von leeren Rufmeldungen**

(30) Priorität: 24.12.1999 DE 19963040
(71) Anmelder: Philips Corporate Intellectual Property GmbH, 52064 Aachen (DE); Koninklijke Philips Electronics N.V., 5621 BA Eindhoven (NL)
(72) Erfinder: Kalveram, Hans, Philips Corp. Intel. Property GmbH, 52064 Aachen (DE); Tritthart, Arthur, Philips Corp. Intell. Property, 52064 Aachen (DE)
(74) Vertreter: Volmer, Georg, Dipl.-Ing.

(57) **Zusammenfassung**

Bei Empfangsgeräten für mobile Kommunikation bei welchen wenigstens eine Steuereinrichtung vorgesehen ist zur Auswertung von auf mehrere Rufmeldungsreilblöcke verteilte Rufmeldungen und zum Versetzen des Empfangsgerätes in einen Stromsparzustand wenn die Rufmeldung eine vorgegebene Teilnehmerkennung nicht enthält wird zu einer Verbesserung der Stromersparnis vorgeschlagen, dass die Steuervorrichtung einen empfangenen Rufmeldungsteilblock mit einem gespeicherten Muster vergleicht und bei Übereinstimmung von empfangenen Rufmeldungsteilblock die Steuervorrichtung den Empfang weiterer Rufmeldungsteilblöcke desselben Rufmeldungsblocks unterdrückt.

## Beschreibung

Die Erfindung betrifft ein Empfangsgerät für mobile Kommunikation bei der wenigstens eine Steuereinrichtung vorgesehen ist zur Auswertung von Rufmeldungen und zum Versetzen des Empfangsgerätes in einen Stromsparzustand.

Zur ständigen Erreichbarkeit sind Empfangsgeräte für mobile Kommunikation, so ausgestaltetet, dass sie auf einem bestimmten Funkkanal Meldungen abhören, um festzustellen, ob ein Verbindungswunsch von einem anderen Kommunikationsteilnehmer signalisiert wird. Erfolgt diese Rufsignalisierung in Nachrichtenblöcken in vorgegebenen Zeitabständen, so kann - soweit keine anderen Empfangsaufgaben vorgesehen sind - das Empfangsteil sowie weitere nicht erforderliche Teile des Empfangsgerätes bis zum erwarteten Eintreffen eines nächsten zu empfangenden Nachrichtenblocks abgeschaltet werden. Auf diese Weise kann der Stromverbrauch im sogenannten Standby Betrieb reduziert werden.

Ein Mobilfunkempfänger mit einer Anordnung zur Verarbeitung von Rufmeldungen (paging messages) ist beispielsweise aus EP 0 655 872 A2 bekannt, bei dem ein Signalprozessor und ein Mikroprozessor derart zusammenwirken, dass der Signalprozessor in empfangenen Rufmeldungen (paging messages) enthaltene Teilnehmernummern (identity number) mit einer vom Mikroprozessor in einem Dual Port Speicher abgelegten Teilnehmernummer des Mobilfunkgerätes vergleicht, und nur dann den Mikroprozessor zur weiteren Signalverarbeitung aus einem stromsparenden Ruhezustand heraus aktiviert, wenn eine in den Rufmeldungen enthaltene Teilnehmernummer mit der im Dual Port Speicher gespeicherten Teilnehmernummer übereinstimmt. Meldungen, welche keine Teilnehmernummer enthalten, sogenannte leere Meldungen, werden vom Digitalen Signalprozessor erkannt und ignoriert.

Bei bestimmten Mobilfunksystemen, wie beim mittlerweilen auch über Europa hinaus verbreiteten Global System for Mobil Communication (GSM), auf den sich auch der beschriebene Stand der Technik bezieht, ist die Aussendung einer Teilnehmerkennung (mobile subscriber idendity) auf mehrere einzelne Signalbursts verteilt. Beim GSM System kann ein aus vier Signalbursts bestehender Signalblock bis zu vier Teilnehmerkennungen enthalten, welche mittels einer Kombination von Blockkodierung (block coding), Faltungskodierung (convolutional coding) und Kodespreizung (interleaving) gegen Übertragungsfehler geschützt sind. Ein Signalburst enthält hierdurch aber nur jeweils einen bestimmten Teil einer jeden in der Rufmeldung enthaltenen Teilnehmerkennung. Zur Auswertung der Teilnehmerkennungen wurde daher bisher davon ausgegangen, dass der Empfang aller vier Signalbursts einer Rufmeldung erforderlich ist.

Aufgabe der Erfindung ist es ein Mobilfunkgerät anzugeben, mittels welchen in Mobilfunksystem, bei welchen Teilnehmerkennungen nicht direkt aus einem empfangenen Signal ermittelbar sind, eine Stromeinsparung zu erzielen.

Diese Aufgabe wird durch die kennzeichnenden Merkmale des Anspruchs 1 gelöst. Durch den Vergleich eines Rufmeldungsteilblocks, bzw. eines aus mehreren kleineren Rufmeldungsteilblöcken zusammengesetzten größeren Rufmeldungsteilblocks mit einem vorgegebenen Muster kann in vielen Fällen, ohne dass hierzu der Inhalt aller Rufmeldungsteilblöcke bekannt sein muss, erkannt werden, dass der bisher empfangene Rufmeldungsteilblock keine Teilnehmerkennung, und somit auch nicht die eigene Teilnehmerkennung enthalten werden. Damit kann in vielen Fällen bereits nach Empfang des ersten Rufmeldungsteilblocks in den Stromsparzustand gegangen werden, so dass sich die Standby-Zeit des Funkempfängers entsprechend verlängert.

In der Ausgestaltung nach Anspruch 2 werden aus Rufmeldungen, die sich als leere Rufmeldungen herausstellen, der erste bzw. mehrere empfangene Rufmeldungsteilblöcke als neues Muster gespeichert. Auf diese Weise kann sich das Mobilfunkgerät von selbst auf solche Muster einstellen. Dies ist insbesondere dann von Vorteil wenn ein bestimmtes Muster nicht durch Standards vorgegeben ist. Das Funkgerät kann sich daher auf jede beliebige von einer Basisstation ausgesandte leere Rufmeldung einstellen.

Die Erfindung wird nun anhand eines Ausführungsbeispiels näher beschrieben und erläutert.

Es zeigen:
- Fig. 1: Blockschaltbild eines Mobilfunkempfängers
- Fig. 2: Schema des Broadcast Channels im GSM-System
- Fig. 3: Flussdiagramm zur Abarbeitung der Signalbursts gemäß einem ersten Ausführungsbeipiels

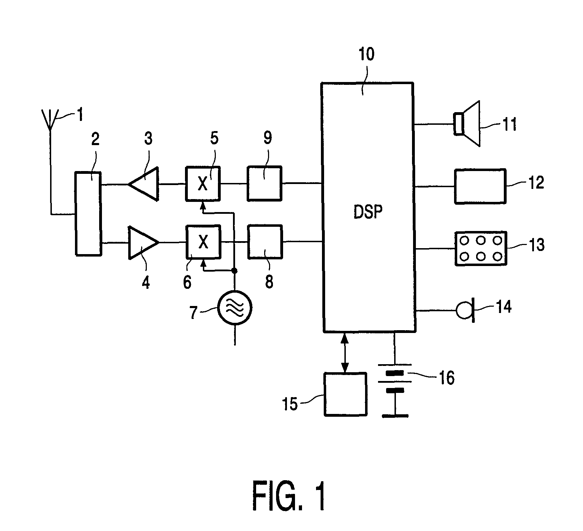

Fig. 1 zeigt das Blockschaltbild eines Mobilfunkempfängers mit einer Sende- und Empfangsantenne 1, an welcher mittels eines Duplexschalters 2 eine Sendestufe 3 und eine Empfangsstufe 4 angeschlossen sind. Mittels eines empfangs- und eines sendeseitigen Mischers 5, 6 und eines gesteuerten Mischoszillators (local oszillator) 7 werden die empfangen Signale ins Basisband, bzw. zu sendende Signale vom Basisband in die Sendefrequenzlage umgesetzt. Empfangene Signale werden in einem Demodulator 8 demoduliert und einem Digitalen Prozessor 10 zur Signalaufbereitung und Auswertung zugeführt. Von diesem Digitalen Prozessor 10 erzeugte Sendesignale sind einem Modulator 9 zugeführt, welcher die modulierten Signale an den sendeseitigen Mischer 6 weiterleitet. An dem Digitalen Prozessor 10 sind ferner ein Lautsprecher 11 zur Wiedergabe von empfangenen Audiosignalen, eine Alphanumerische Anzeige 12 zur Benutzerführung und Wiedergabe von empfangenen nichtverbalen Informationen, ein Tastenfeld 13 zur Bedienung des Mobilfunkgerätes sowie ein Mikrofon 14 zur Aufnahme von Sprachsignalen angeschlossen. Ferner ist eine Schnittstelle zum Lesen einer Speicherkarte 15 vorgesehen, auf welcher unter anderem eine dem Benutzer des Mobilfunkgerätes zugeordnete Teilnehmerkennung gespeichert ist, mittels welcher sich das Mobilfunkgerät im Mobilfunksystem identifiziert.

Der Digitale Prozessor 10 führt auch Steueraufgaben aus und enthält hierzu nicht dargestellte flüchtige Speicher zur Speicherung von veränderlichen Daten und ebenfalls nicht dargestellte nichtflüchtige Speicher, in welchem beispielsweise die Steueralgorithmen zum Betreiben des Mobilfunkgerätes sowie zur Signalverarbeitung abgelegt sind. Der Digitale Prozessor 10 steuert auch die Stromversorgung der einzelnen Baugruppen, insbesondere in dem hier interessierenden Fall der Stromersparnis beim Empfang von Meldungen im Standby-Zustand die Stromversorgung der Empfangsstufe 3, des empfangsseitigen Mischers 5, des Demodulators 8 und des steuerbaren Mischoszillators 7. Für die Dauer eines Stromsparzustands werden diese Bauteile nicht mit Betriebsstrom versorgt und verbrauchen demzufolge auch keine Energie. Rechtzeitig bevor diese Bauteile zum Empfang benötigt werden, werden diese Bauteile mit der Stromversorgung verbunden. Hierbei sind die unterschiedlichen Verzögerungszeiten die zwischen dem Einschalten der Stromversorgung und dem Erreichen des Betriebszustandes der einzelnen Baugruppen bestehen zu berücksichtigen. Da diese Einschwingzeiten etc. von der jeweiligen Ausgestaltung der Baugruppe abhängig sind, können hierüber keine genaueren Angaben gemacht werden. Wegen der verschiedenen Möglichkeiten ein solches Mobilfunkgerät zu konzipieren können die Empfangsbaugruppen 3, 5, 7, 8 nur als Beispiel für im Stromsparzustand abgeschaltete Bauteile stehen. Im Einzelfall muss der Fachmann selbst entscheiden welche weiteren Bauteile, beispielsweise Teile des Digitalen Prozessors 10 sinnvollerweise in einem der Stromsparzustände noch abgeschaltet werden können.

Ein im GSM-System eingebuchtes Mobilfunkgerät, welches gerade kein Gespräch abwickelt befindet sich im Bereitschaftszustand (idle mode). Im Bereitschaftszustand empfängt das Mobilfunkgerät nach Vorgabe durch eine Basisstation im Abstand von 0,5- 2,1 Sekunden auf dem Broadcast Channel BCCH blockweise ausgestrahlte Rufmeldungen. Im GSM System besteht eine Rufmeldung aus 184 Bits, welche im folgenden als Informationsbits bezeichnet werden. Durch Zufügung von Redundanz in der Kanalcodierung werden diese 184 Informationsbits auf 456 Bits, welche zur Unterscheidung von den Informationsbits im folgenden als kanalkodierte Bits bezeichnet werden, aufgeweitet. Die 456 kanalkodierten Bits werden in vier einzelnen, gleichlangen sogenannten Bursts gesendet, so dass jeder Burst 114 kanalkodierte Bits enthält. Mit zusätzlichen sogenannten Trainings- und Guardbits dauert ein Burst 0,577 ms. Jeweils acht Zeitschlitze (time slots) in welchen Bursts gesendet werden sind beim GSM-System zu einem Rahmen zusammengefasst, so dass die Rahmendauer 4,615 ms beträgt.

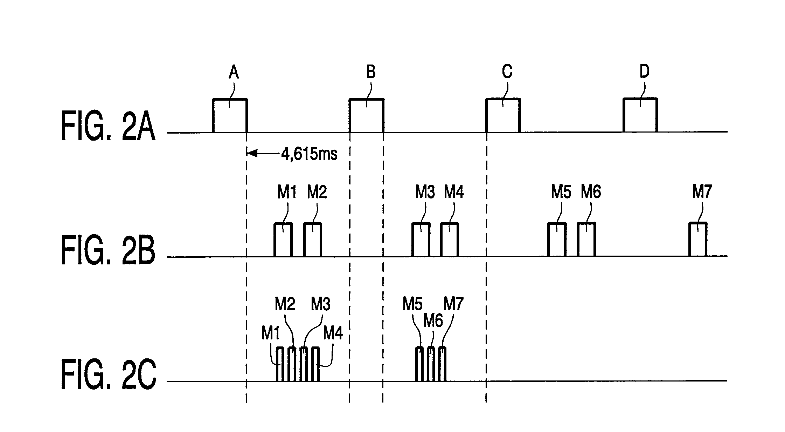

Die Bursts, die jeweils einen Teil einer Rufmeldung enthalten werden im folgenden als Signalburst bezeichnet. Die vier Signalbursts einer Rufmeldung werden in vier aufeinanderfolgenden Rahmen jeweils im ersten Zeitschlitz gesendet. Figur 2A zeigt schematisch die Verteilung der vier aufeinanderfolgenden Signalbursts A,B, C, D im BCCH.

Im GSM-System wird der BCCH von einer Mobilstation kontinuierlich mit gleichbleibender Leistung ausgesendet, so dass durch Anmessen des BCCH jede Mobilstation ein Abbild ihrer Funksituation erstellen kann. Hierzu wird von der Basisstation der Mobilstation eine Liste mit anderen Basisstationen vorgegeben, welche die Mobilstation zyklisch anmessen. Der Empfang einer Rufmeldung und das Anmessen von Basisstationen, welches als Monitoring bezeichnet wird, sind grundsätzlich zwei voneinander unabhängige Vorgänge. Da beim Empfang einer Rufmeldung ein Mobilfunkgerät ohnehin eingeschaltet sein muss, wurde die Zeit zwischen dem Empfang von Signalburst schon immer zum Monitoring genutzt, um einen günstigen Stromverbrauch zu erzielen.

Üblicherweise wird als Abstand zwischen Empfang eines Signalbursts und dem Anmessen von Basisstationen in sieben Messintervallen M1 ... M7 ein zeitlicher Versatz von 2,5 bis drei Zeitschlitzen eingehalten, wodurch es möglich ist in jedem Rahmen nach Empfang eines Signalbursts noch jeweils zwei Messungen durchzuführen. Dieser zeitliche Abstand zwischem Empfang eines Signalbursts und Anmessen von Basisstationen gewährleistet eine entsprechende Zeitreserve für das Umstimmen des Mischoszillators. Dieses Zeitraster entspricht dem im GSM-System für den Gesprächszustand vorgegebenen zeitlichen Abstand zwischen Empfangszeitschlitz, Sendezeitschlitz und einem weiteren Zeitschlitz zum Messen anderer Basisstationen. Der Sendezeitschlitz TX beginnt in einer Mobilstation etwa drei Zeitschlitze, abzüglich eines Timing Advances, der im GSM-System dazu vorgesehen ist, dass die von einer Mobilstation gesendeten Bursts jeweils genau drei Zeitschlitze nach einem jeweiligen, von einer Basisstation gesendeten Burst an dieser Basistation eintreffen. Entsprechend wurde im GSM-Standard die Anzahl der in 2 sec. anzumessenden Basisstationen auf sieben gelegt, so dass in den ersten drei Rahmen jeweils zwei und im vierten Rahmen nur noch eine Basisstation angemessen werden muss.

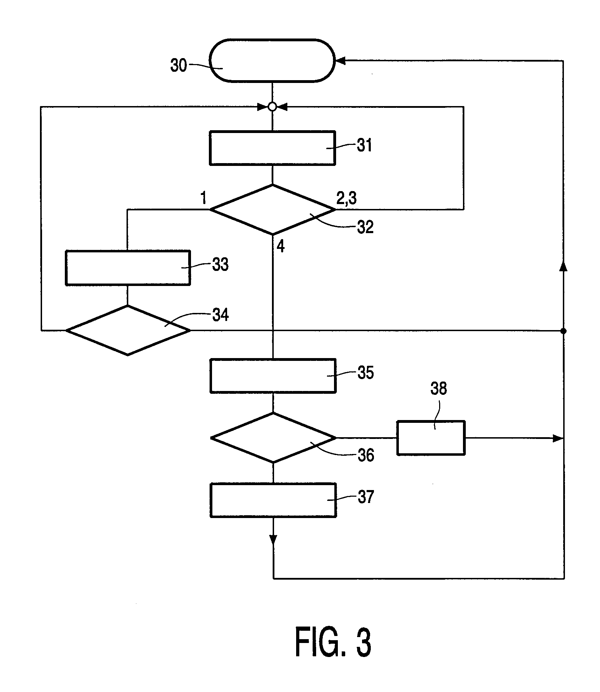

An Hand des in Figur 3 dargestellten Flussdiagramms wird nun die im Digitalen Prozessor 10 implementierte Signalauswertung zur Steuerung des Schlafzustandes und des Stromsparmodus beschrieben. Rechtzeitig bevor der Empfang des ersten Signalburst einer Rufmeldung erwartet wird, wird der jeweils zuvor eingenommene Schlafzustand des Mobilfunkempfängers beendet. Die Verarbeitung beginnt in Figur 3 im Stromsparzustand 30. Im Ausführungsbeispiel werden je nachdem wie viel Zeit bis zu dem Zeitpunkt verbleibt, an dem der Empfänger empfangsbereit sein muss die Empfangsbaugruppen 3, 5, 7, 8 entsprechend der Wiedereinschaltzeit einer einzelnen Baugruppen unterschiedlich vor Beginn des nächsten Rahmens einer Rufmeldung wieder aktiviert so dass rechtzeitig mit Eintreffen des ersten Signalbursts A dieser empfangen (Block 31) und vom Digitalen Prozessor 10 entzerrt werden kann. Anhand einer Abfrage (Vergleichsblock 32) wird je nach der Nummer des empfangenen Signalburst entsprechend verzweigt.

Zunächst detektiert der im Digitalen Prozessor (10) implementierte Entzerrer die in dem Signalburst enthaltenen kanalcodierten Bits (Block 33). Bei diesem Ausführungsbeispiel hat es sich als ausreichend erwiesen, an dieser Stelle eine sogenannte Hard-Decision-Detektion zu verwenden, bei der nur die Binärwerte der kanalkodierten Bits ausgegeben werden; im Gegensatz zu einer SDRAM Timing 2T S, bei dem jedes kanalkodierte Bit als ein Wert dargestellt wird, der die Zuverlässigkeit angibt, mit welcher jedes detektierte Bit einen bestimmten Binärwert zugeordnet werden kann.

Sodann werden die kanaldekodierten Bits mit einem gespeicherten Muster verglichen, das die kanalkodierten Bits des ersten Zeitschlitzes der leeren Rufmeldung enthalten soll (Vergleichsblock 34). Dieses Muster kann entweder fest vorgegeben sein, oder wie noch später genauer beschrieben vom Mobilfunkgerät bzw. vom Digitalen Prozessor 10 des Mobilfunkgerätes selbst generiert werden. Wird eine Übereinstimmung zwischen den detektierten Bits des empfangenen ersten Signalburst und dem gespeicherten Muster festgestellt, so werden die nächsten drei Signalbursts der Rufmeldung mit großer Wahrscheinlichkeit keine Rufmeldung enthalten. Das Mobilfunkgerät kann daher sofort in den Stromsparzustand 30 versetzt werden. Wurde hingegen keine hinreichende Übereinstimmung festgestellt, müssend auch noch die nächsten Signalburst B, C empfangen werden um dann schließlich nach Empfang des vierten Signalsblocks D die gesamte Rufmeldung auszuwerten um einen Ruf für die eigene Mobilstation anzunehmen oder letztlich zu erkennen, dass die eigene Teilnehmerkennung doch nicht in der Rufmeldung enthalten war. Die Stromersparnis ist hierdurch natürlich von der Auslastung der Zellen des Mobilfunk systems abhängig. Je mehr leere Rufmeldungen ausgesandt werden, um so größer ist natürlich die Stromersparnis.

Zur Auswertung aller vier Signalbursts wird die gesamte Meldung dekodiert (Block 35) und entschieden ob die dekodierte Rufmeldung wenigstens eine Teilnehmerkennung enthält. Ist dies nicht der Fall, handelt es sich nämlich um eine leere Rufmeldung, die aus irgendeinem Grund nicht bereits beim ersten Signalburst als solche erkannt wurde, wird das Bitmuster aus dem die Dekodierung vorgenommen wurde als neues Vergleichsmuster gespeichert (Block 38) und bis zum Empfang des nächsten ersten Signalburst in einen Stromsparzustand gegangen. Auf diese adaptiert sich der Empfänger von selbst auf leere Rufmeldungen. Hierdurch ist es außerdem möglich einen entsprechenden Ausschnitt aus einer gespeicherten kodierten leeren Nachricht mit einem empfangenen und entzerrten, aber noch nicht dekodierten Rufteilblock zu vergleichen. Dies ist insbesondere von Vorteil, wenn - wie im vorliegenden Ausführungsbeispiel - mit nur einem von vier Teilblöcken selbst unter günstigsten Bedingungen eine Dekodierung keine verwertbaren Ergebnisse erbringen würde.

Der Vergleich mit dem gespeicherten Muster kann beispielsweise durch bitweisen Vergleich von empfangenen Signalburst und gespeicherten Muster erfolgen, wobei die Anzahl der nicht übereinstimmenden Bits ermittelt wird. Stimmen mehr als eine vorgegebene Anzahl D von Bits nicht überein, wird davon ausgegangen, dass die Rufmeldung wenigstens eine Teilnehmerkennung enthält. Eine fehlerfreie Übereinstimmung zwischen empfangenen Signalburst und gespeichertem Muster würde wegen Übertragungsfehlern nur selten erreicht werden, so dass eine Vielzahl von leeren Rufmeldungen nicht als solche akzeptiert werden würden, und so der Effekt der Stromersparnis zu Nichte gemacht werden würde. Andererseits darf die Ablehnungsschwelle D nicht zu großzügig bemessen sein, weil sonst die Gefahr besteht, dass Signalbursts mit relevanten Inhalt als leere Rufmeldungen abgelehnt werden würden, was fälschlicherweise zur Nichterreichbarkeit des Funkempfängers führten würde. Bei Simulationen hat sich herausgestellt, dass für das im Ausführungsbeispiel gewählte GSM-System eine Ablehnungsschwelle von D = dreizehn Bit einen guten Kompromiss ergibt. Bei dem sehr ungünstigen Modellfall des Traffic Urban 50 km/h (TU50) wird bei einem Signal-Rauschabstand von 20 dB nur bei ca. jeder fünfhundersten leeren Rufmeldung fälschlicherweise nicht bereits nach dem Empfang des ersten Teilblocks in den Rufzustand gegangen. Bei Signal-Rauschabständen von 12 dB, was in etwa der Einbuchungsschwelle entspricht, kann immerhin noch in neun von zehn Fällen eine leere Meldung erkannt werden und der Stromsparmodus ausgenutzt werden. Der umgekehrte Fall, dass die eine Teilnehmerkennung fälschlicherweise als leere Meldung interpretiert wird, ist in allen Fällen größer als eins zu 10⁵. Es bleibt dem Fachmann überlassen gegebenenfalls andere oder noch weitere geeignete Ablehnungsschwellen, beispielsweise unter Ausnutzung des unterschiedlich starken Fehlerschutzes der einzelnen Bits bezogen auf bestimmte Bitpositionen, vorzusehen.

Wurde eine nicht leere Rufmeldung erkannt wird die Rufmeldung auf die eigene Teilnehmerkennung untersucht usw. Da sich diese Verarbeitung nicht vom Stand der Technik unterscheidet, wurde sie im Ausführungsbeispiel in einem einzigen Verarbeitungsblock 37 zusammengefasst.

Eine weitere, nicht dargestellte Ausführungsmöglichkeit besteht darin, dass in Situation, in welchen der erste Signalburst wegen schlechten Empfangs als Signalburst einer leeren Rufmeldung abgelehnt wird, dieser Vergleich mit einem zweiten und gegebenenfalls mit einem dritten empfangen Signalburst und entsprechend gespeicherten Mustern wiederholt wird. Obwohl der Digitale Prozessor 10 in diesen Fällen nicht sofort nach Auswertung des ersten Signalbursts in den Stromsparmodus schalten kann, so besteht immerhin die Chance dass ein nicht als leerer Signalburst erkannter Signalburst immerhin nach dem zweiten oder dritten Signalburst dann doch noch erkannt wird und so doch noch eine, wenn auch etwas kleinere Stromersparnis erzielt wird.

Ein Funkempfänger für ein GSM-Netz muss im Empfangsmodus auch noch andere Mobilstationen anmessen, und die gemessenen Empfangspegel an die eigene Basisstation melden. Diese Messungen bilden beispielsweise die Grundlage für das Umbuchen in eine andere Funkzelle (cell reselection). Üblicherweise erfolgten diese Messungen zwischen dem Empfang der Signalbursts. Wegen dieser noch durchzuführenden Messungen kann das Mobilfunkgerät auch bei erkannten leeren Rufmeldungen leider noch nicht bis Eintreffen des ersten Signalbursts der nächsten Rufmeldung völlig abgeschaltet werden.

Vorteilhaft ist es jedoch alle Messungen noch im Anschluss an den ersten Signalburst oder wenigstens nach dem zweiten Signalburst abzuschließen, da dann der Stromsparmodus zur Durchführung dieser Messungen nicht unterbrochen werden muss. Je kürzer aber ein Messintervall für die Anmessung einer anderen Basisstation wird, um so größer ist die Gefahr, dass die Messergebnisse verfälscht sind. Eine solche Verfälschung kann sich durch kurzfristige Signaleinbrüche oder auch durch das sogenannte Powerramping ergeben, bei welchen Basisstationen zwischen den einzelnen signalbursts die Sendeleistung absenken und wieder ansteigen lassen. Zur Vermeidung solcher Verfälschungen wurde daher bisher ein relativ langes Messintervall gewählt, wodurch einzelne Signaleinbrüche nicht ins Gewicht gefallen sind. Zur Vermeidung solcher Verfälschung sieht das Ausführungsbeispiel hingegen vor, die schlechtesten Messwerte, beispielsweise die schlechtesten acht zu verwerfen, das heißt bei Bildung des Mittelwertes nicht zu berücksichtigen. Eine weitere Ausgestaltung besteht auch darin, die als Block zusammenhängenden schlechtesten Messwerte zu verwerfen. Auf diese Weise kann die Länge eines Messintervalls soweit verkürzt werden, zum Beispiel auf 40 Bits, dass beispielsweise zum Empfangszeitpunkt des dritten Signalbursts bereits alle Messungen abgeschlossen sind. Hierdurch kann bei erkannter leerer Rufmeldung der Empfänger nach der letzten Messung, das heißt noch vor Empfang des dritten Signalbursts vollständig abgeschaltet werden (Fig. 2C).

Es versteht sich von selbst, dass der beschriebenen Algorithmus mit anderen Algorithmen kombiniert werden kann, beispielsweise mit dem Versuch die Teilnehmerkennungen bereits zu berechnen, wenn noch nicht alle Signalbursts einer Rufmeldung empfangen sind. Da bei guten Empfangsverhältnissen dank des Fehlerschutzes unter Umständen eine Dekodierung der in einem Rufmeldungsblock enthaltenen Teilnehmerkennungen bereits mit zwei, oder bei mäßig gestörten Empfangsbedingungen zumindest mit den ersten drei Rufmeldungsteilblöcken möglich ist, kann auf diese Weise auch dann vorzeitig in einen Stromsparmodus gegangen werden, wenn die empfangene Rufmeldung keine leere Rufmeldung ist.

Die Erfindung wurde anhand eines einzigen Digitalen Prozessors beschrieben, ist aber natürlich nicht auf Einprozessor Systeme beschränkt. So war es in der Vergangenheit durchaus üblich die Funktionen Signalverarbeitung, Signalauswertung und Steuerung auf mehrere integrierte Bausteine, beispielsweise einen Digitalen Signalprozessor und einen Mikroprozessor zu verteilen. Der verwendete Begriff Mobilfunkempfänger und die Beschreibung des Ausführungsbeispiels an Hand des GSM-Netzes beschränkt die Erfindung natürlich auch nicht auf Mobilfunkgeräte für zellulare Netze oder das GSM-Netz im speziellen. Der Fachmann kann aus der Offenbarung Nutzen ziehen für alle Funkkommunikationssysteme, bei welchen Rufmeldungen zeitlich gestreckt gesendet werden. Hier kann eine Teilblockbildung auch empfängerseitig vorgenommen werden. Da die Grenzen zwischen Funksystem ohnehin immer mehr verwischen sollen unter dem Begriff Funkempfänger auch sogenannte Schnurlose Telefone verstanden werden. Je nach dem Funksystem in welchen die Erfindung eingesetzt wird, kann es auch sinnvoll sein, empfangene Rufmeldungsteilblöcke mit mehr als nur einem gespeicherten Muster zu vergleichen.

## Patentansprüche

1. Empfangsgerät für mobile Kommunikation bei der wenigstens eine Steuereinrichtung vorgesehen ist zur Auswertung von auf mehrere Rufmeldungsteilblöcke verteilte Rufmeldungen und zum Versetzen des Empfangsgerätes in einen Stromsparzustand wenn die Rufmeldung eine vorgegebene Teilnehmerkennung nicht enthält,
dadurch gekennzeichnet,
dass die Steuervorrichtung einen empfangenen Rufmeldungsteilblock mit einem gespeicherten Muster vergleicht und bei Übereinstimmung von empfangenen Rufmeldungsteilblock die Steuervorrichtung den Empfang weiterer Rufmeldungsteilblöcke desselben Rufmeldungsblocks unterdrückt.

2. Empfangsgerät nach Anspruch 1,
dadurch gekennzeichnet,
dass die betreffenden Rufmeldungsteilblöcke einer als leeren Rufmeldung ausgewerteten Rufmeldung als neues Muster gespeichert wird.

3. Empfangsgerät nach Anspruch 1 oder 2,
dadurch gekennzeichnet,
dass bei Kontrollmessungen eine Anzahl von Messwerten bei der Bildung des Messergebnisses unberücksichtigt bleiben.

4. Empfangsgerät nach Anspruch 1, 2 oder 3,
dadurch gekennzeichnet,
dass die Kontrollmessungen bereits vor Eintreffen des zweiten oder dritten Rufmeldungsteilblocks abgeschlossen sind.
